# EUROPÄISCHE PATENTSCHRIFT

(11) **EP 1 922 352 B1**
(45) Veröffentlichungstag und Bekanntmachung des Hinweises auf die Patenterteilung: **18.03.2009**
(21) Anmeldenummer: 06793077.6
(22) Anmeldetag: 30.08.2006
(51) Int. Cl.: C08G 77/46, C08F 299/08, C08F 2/00, C08F 283/06

(54) **HYDROPHILE SILIKONORGANOCOPOLYMERE**
HYDROPHILIC ORGANOFUNCTIONAL SILICONE COPOLYMERS
ORGANOCOPOLYMERES DE SILICONE HYDROPHILES

(30) Priorität: 08.09.2005 DE 102005042752
(43) Veröffentlichungstag der Anmeldung: 21.05.2008
(73) Patentinhaber: Wacker Chemie AG, 81737 München (DE)
(72) Erfinder: STARK, Kurt, 91284 Neuhaus (DE)
(74) Vertreter: Schuderer, Michael
(86) Internationale Anmeldenummer: PCT/EP2006/065802
(87) Internationale Veröffentlichungsnummer: WO 2007/028740

(56) Entgegenhaltungen:
- EP-A1- 0 614 924
- DE-A1- 10 332 527
- DE-A1- 19 942 565
- US-B1- 6 403 074

## Beschreibung

Die Erfindung betrifft hydrophile Silikonorganocopolymere, ein Verfahren zu deren Herstellung und deren Verwendung.

Bei hydrophilen Silikonorganocopolymeren handelt es sich um Silikonpolyether, das heißt mit Polyalkylenoxiden modifizierte Polysiloxane. Derartige Produkte finden Verwendung in der Kosmetik als Dimethicon-Copolyole, als Schutzkolloid und Emulgiermittel, als Entschäumer oder in der Textilausrüstung (hydrophile Weichmachung).

Bisheriger Stand der Technik bezüglich der Herstellung derartiger Verbindungen ist es, H-Siloxane mit ungesättigten Polyethern (Polyalkylenoxiden) zu hydrosilylieren. Dazu ist die Anwesenheit eines Platin-Katalysators erforderlich, was allerdings Schwermetalle in das Endprodukt einträgt. Ein weiterer Nachteil dieser Reaktion ist die unzureichende Anknüpfung des ungesättigten Polyethers an die Silikonkette, so dass auch nach der Reaktion immer noch freier Polyether im Produkt vorliegt. Die Anknüpfung ist einigermaßen befriedigend nur möglich, wenn der ungesättigte Polyether Allylgruppen besitzt, jedoch kommt es dabei zu unerwünschten Umlagerungsreaktionen und zur Bildung von Nebenprodukten. Deswegen muss meist mit einem Überschuß an Allyl-Polyether gearbeitet werden. Vinyl-oder (Meth)acrylgruppen führen zu einer noch schlechteren Anknüpfung. Bei Acryl- oder Methacrylfunktionen kommt es sehr häufig zu einer 1,4-Addition und zur Ausbildung einer instabilen Si-O-C-Bindung, das heißt einer sehr labilen und praktisch unbeständigen Anknüpfung. Diese ungenügende Anknüpfung kann zu Inhomogenitäten des Produkts (z.B. Phasenseparation) und zu negativen Eigenschaften bei dessen Verwendung führen.

In der DE 10020670 A1 sind mit Polyalkylenglykol modifizierte Organosiloxanylderivate beschrieben, welche mittels Hydrosilylierung von H-Siloxanen mit vinylfunktionellen Polyalkylenoxiden erhalten werden. Aus der EP 1097701 A1 und der EP 1284282 A1 sind Polyoxyalkylen-Polysiloxan-Copolymere bekannt, welche mittels Hydrosilylierung von H-Siloxanen mit ungesättigten Polyethern, in Gegenwart von Metallkatalysator, erhalten werden und als Emulgator oder Entschäumer Verwendung finden. Die WO 99/10412 A1 betrifft Polysiloxan-Polyalkylenoxid-Blockcopolymere, welche mittels Hydrosilylierung zugänglich werden. In der WO 02/15853 A1 wird die Verwendung von Vinylestercopolymerisaten in haarkosmetischen Formulierungen beschrieben, wobei die Polymerisation des Vinylesters in Gegenwart von polyetherhaltigen Verbindungen erfolgt, welche Silikonanteile enthalten können. Die JP 2000-044639 betrifft die Herstellung von wässrigen Kunstharzemulsionen für Beschichtungs- und Klebemittel, wobei ethylenisch ungesättigte Monomere in wässrigem Medium in Gegenwart eines Makromonomers polymerisiert werden, welches durch Reaktion eines Silikons mit terminaler ungesättigter Gruppe und eines Polyalkylenglykol-(Meth)acrylats, erhalten wird.

Es bestand die Aufgabe, hydrophile Silikonorganocopolymere in einer einfachen Weise zur Verfügung zu stellen, welche sich durch eine stabile und vollständige Anbindung des hydrophilen Anteils an den Silikonanteil auszeichnen.

Gegenstand der Erfindung sind hydrophile Silikonorganocopolymere erhältlich mittels radikalischer Polymerisation in Substanz oder Lösung von einem oder mehreren Silikonmakromeren mit jeweils mindestens einer ungesättigten Gruppe, und einem oder mehreren Polyethern mit jeweils mindestens einer ungesättigten Gruppe, sowie gegebenenfalls einem oder mehreren ethylenisch ungesättigten Monomeren.

Ein weiterer Gegenstand der Erfindung ist ein Verfahren zur Herstellung von hydrophilen Silikonorganocopolymeren mittels radikalischer Polymerisation in Substanz oder Lösung von einem oder mehreren Silikonmakromeren mit jeweils mindestens einer ungesättigten Gruppe, und einem oder mehreren Polyethern mit jeweils mindestens einer ungesättigten Gruppe, sowie gegebenenfalls einem oder mehreren ethylenisch ungesättigten Monomeren.

Für die Herstellung der hydrophilen Silikonorganocopolymere geeignete Silikonmakromere sind lineare, verzweigte, cyclische und dreidimensional vernetzte Polysiloxane mit mindestens 5 Siloxanwiederholungseinheiten und mit mindestens einer radikalisch polymerisierbaren funktionellen Gruppe. Vorzugsweise beträgt die Kettenlänge 5 bis 10000 Siloxanwiederholungseinheiten. Ethylenisch ungesättigte Gruppen wie Alkenylgruppen werden als polymerisierbare, funktionelle Gruppen bevorzugt.

Bevorzugte Silikonmakromere sind Silikone mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, wobei wenigstens ein a = 1 ist, und n = 5 bis 10000 beträgt.

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest, und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen-oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbaren Gruppen sind die Vinyl-, Allyl-, Butenyl-, Styryl- sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, 3-Acryloxypropyl-, Methacryloxymethyl- und Acryloxymethyl-Gruppe.

Bevorzugt werden α,ω-Divinyl-Polydimethylsiloxane, α,ω-Di-(3-acryloxypropyl)-Polydimethylsiloxane, α,ω-Di-(3-methacryloxy-propyl)-Polydimethylsiloxane, α,ω-Di-(Acryloxymethyl)-Polydimethylsiloxane, α,ω-Di-(Methacryloxymethyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butyl-oder Methoxyrest.

Geeignet sind auch die polymerisierbaren Silikonmakromere, wie sie in der EP-A 614924 beschrieben sind.

Am meisten bevorzugt als Silikonmakromere werden α,ω-Divinyl-Polydimethylsiloxane, α-Mono-(3-methacryloxypropyl)-Polydimethylsiloxane, α,ω-Di-(3-Acryloxypropyl)-Polydimethylsiloxane und α,ω-Di-(3-Methacryloxypropyl)-Polydimethylsiloxane.

Als ungesättigte Polyether kommen Polyalkylenoxide mit mindestens 3 Wiederholungseinheiten in Frage, die eine oder mehrere zur Polymerisation geeignete Alkenylgruppe besitzen. Die ungesättigte Gruppe kann eine Vinyl-, Allyl-, Styryl-, Methacryl-oder Acrylgruppe sein und steht bevorzugt am Kettenende. Die hydrophilen Alkylenoxid-Einheiten im Polyether sind solche mit 1 bis 8 C-Atomen und können gleich oder verschieden sein und können statistisch oder blockartig verteilt sein. Als Alkylenoxid-Einheiten kommen vorzugsweise Ethylenoxid, Propylenoxid und Butylenoxid in Betracht, besonders bevorzugt werden Ethylenoxid, Propylenoxid sowie deren Gemische. Bevorzugt sind Kettenlängen von 3 bis 1000 Wiederholungseinheiten. Geeignet sind α,ω-Divinyl-Polyether, α,ω-Diallyl-Polyether und α,ω-Di-(meth)acryl-Polyether. Bei den nur einfach mit ungesättigten Gruppen substituierten Polyethern sind α-Monovinyl-Polyether, α-Monoallyl-Polyether, α-Mono-(Meth)acryl-Polyether bevorzugt. Bei den monofunktionellen Polyethern befindet sich am anderen Kettenende ein Alkylrest mit 1 bis 6 C-Atomen oder eine Hydroxylgruppe.

Am meisten bevorzugt als ungesättigte Polyether werden Polyethylenglykol-Divinylether, Polyethylenglykol-Diallylether, Polypropylenglykol-Divinylether, Polypropylenglykol-Diallylether, Polyethylenglykol-Di(meth)acrylat, Polypropylenglykol-Di(meth)acrylat, Polyethylenglykol-mono-vinylether, Polyethylenglykol-mono-allylether, Polyethylenglykol-mono-acrylat, Polyethylenglykol-mono-methacrylat, Polypropylenglykol-mono-acrylat, Polypropylenglykol-mono-methacrylat, Polyethylenglykol-Polypropylenglykol-mono-vinylether, Polyethylenglykol-Polypropylenglykol-mono-allylether, Polyethylenglykol-Polypropylenglykol-mono-acrylat oder Polyethylenglykol-Polypropylenglykol-mono-methacrylat.

Als ethylenisch ungesättigte Monomere kommen ein oder mehrere Monomere aus der Gruppe umfassend Vinylester von unverzweigten oder verzweigten Alkylcarbonsäuren mit 1 bis 15 C-Atomen, (Meth)acrylsäureester von Alkoholen mit 1 bis 15 C-Atomen, (Meth)acrylamide, Vinylaromaten, Olefine, Diene, Vinylhalogenide, Vinylketone, Vinylether, polymerisierbare Silane, ungesättigte Mono- und Dicarbonsäuren oder deren Salze, ethylenisch ungesättigte Carbonsäureamide und -nitrile, Mono- und Diester der Fumar- und Maleinsäure, ethylenisch ungesättigte Sulfonsäuren bzw. deren Salze, ethylenisch ungesättigte Phosphorhaltige Monomere und kationische Monomere in Frage.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Resolution Performance Products). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Geeignete ethylenisch ungesättigte Mono- und Dicarbonsäuren oder deren Salze sind beispielsweise Crotonsäure, Itaconsäure, Acrylsäure, Methacrylsäure, Fumarsäure und Maleinsäure. Geeignete ethylenisch ungesättigte Carbonsäureamide und -nitrile sind Acrylamid und Acrylnitril. Als Mono- und Diester der Fumarsäure und Maleinsäure können Diethyl-, und Diisopropylester sowie Maleinsäureanhydrid verwendet werden. Ethylenisch ungesättigte Sulfonsäuren sowie deren Salze sind vorzugsweise Vinylsulfonsäure und 2-Acrylamido-2-methyl-propansulfonsäure. Als ethylenisch ungesättigtes Phosphorhaltiges Monomer kann Vinylphosphonat verwendet werden. Als kationische Monomere werden zum Beispiel Diallyldimethylammoniumchlorid (DADMAC), 3-Trimethylammoniumpropyl(meth)acrylamidchlorid (MAPTAC) und 2-Trimethylammoniumethyl(meth)acrylatchlorid verwendet.

Geeignete polymerisierbare Silane sind γ-Acryl- sowie γ-Methacryloxypropyltri(alkoxy)silane, α-(Meth)acryloxymethyltri(-alkoxy)silane, γ-(Meth)acryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- sowie Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxy-ethoxy)silan, Trisacetoxyvinylsilan, 3-(Triethoxysilyl)propyl-bernsteinsäureanhydridsilan.

Weitere geeignete Monomere sind funktionalisierte (Meth)acrylate und funktionalisierte Allyl- oder Vinylether, insbesondere Epoxy-funktionelle wie Glycidylacrylat, Glycidylmethacrylat, Allylglycidether, Vinylglycidether, oder Hydroxyalkylfunktionelle wie Hydroxyethyl(meth)acrylat, oder substituierte oder unsubstituierte Aminoalkyl(meth)acrylate, oder cyclische Monomere, wie N-Vinylpyrrolidon; oder N-Vinylformamid oder N-Vinylacetamid.

Weitere Beispiele für geeignete Monomere sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAG-ME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Der Einsatz von oben genannten organischen Monomeren führt zu einer Vielzahl von positiven Eigenschaften. So wirken diese - aufgrund ihrer hohen Beweglichkeit - als effektive zusätzliche Verbrückungshilfe bei der Kopplung zwischen dem Silikonmakromer und dem ungesättigten Polyether. Außerdem können durch die Auswahl von bestimmten Monomeren die hydrophilen und hydrophoben Eigenschaften des Silikonorganocopolymers zusätzlich gesteuert werden. Es ist auch möglich, durch die organischen Monomeren (sowohl anionische als auch kationische) Ladungen in das hydrophile Silikonorganocopolymer einzuführen. Durch die Einführung und Verwendung von Monomeren wird ferner die Haftung auf den Substraten deutlich erhöht, insbesondere wenn die Monomere funktionelle Gruppen besitzen. Falls Monomere verwendet werden, die verschiedene funktionelle Gruppen tragen, die miteinander reagieren können und eine Bindung eingehen, so kann das hydrophile Silikonorganocopolymer auch vernetzt werden. Das hat die Vorteile, dass die Festigkeit erhöht werden kann und beim Einsatz im Textilbereich zum Beispiel auch eine hohe Waschpermanenz erhalten werden kann. Die Verwendung von organischen Monomeren neben den Silikonmakromeren und den ungesättigten hydrophilen Polyethern wird also sehr empfohlen.

Im allgemeinen werden 1 bis 99 Gew.-%, vorzugsweise 5 bis 60 Gew.-%, besonders bevorzugt 10 bis 45 Gew.-% Silikonmakromer copolymerisiert. Im allgemeinen werden 1 bis 99 Gew.-%, vorzugsweise 30 bis 90 Gew.-%, besonders bevorzugt 50 bis 80 Gew.-% ungesättigter Polyether copolymerisiert. Im allgemeinen werden 0 bis 98 Gew.-%, vorzugsweise 5 bis 50 Gew.-%, besonders bevorzugt 10 bis 30 Gew.-% ethylenisch ungesättigtes Monomer copolymerisiert. Die Angaben in Gew.-% beziehen sich dabei jeweils auf das Gesamtgewicht der Monomere (Silikonmakromer, ungesättigter Polyether, ethylenisch ungesättigtes Monomer) und addieren sich jeweils auf 100 Gew.-% auf.

Die Herstellung der hydrophilen Silikonorganocopolymere erfolgt mittels Polymerisation in Substanz oder in Lösungsmittel, in Gegenwart von Radikalinitiatoren. Die Polymerisationstemperatur beträgt im allgemeinen 20°C bis 150°C, vorzugsweise 40°C bis 90°C. Im allgemeinen wird bei Normaldruck polymerisiert. Bei der Copolymerisation von bei Raumtemperatur gasförmigen Monomeren wie Ethylen wird unter Druck, im allgemeinen zwischen 1 und 100 bar, gearbeitet. Im allgemeinen wird die Polymerisation bis zu einem Festgehalt von 10 bis 100 %, bevorzugt bis zu einem Festgehalt von 20 bis 60 %, durchgeführt.

Geeignete Radikalinitiatoren sind öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im allgemeinen in einer Menge von 0.005 bis 5.0 Gew.-%, bevorzugt 0.1 bis 3.0 Gew.-%, bezogen auf Gesamtmonomer, eingesetzt.

Die Einstellung des Molekulargewichts und des Polymerisationsgrads ist dem Fachmann bekannt. Diese kann beispielsweise durch Zugabe von Regler, durch den Lösungsmittelgehalt, durch Variation der Initiatorkonzentration und durch Variation der Temperatur erfolgen. Regler oder Kettentransfermittel sind zum Beispiel Acetaldehyd, Butyraldehyd oder Merkaptogruppenhaltige Verbindungen, wie Dodecylmerkaptan.

Geeignete organische Lösungsmittel sind beispielsweise Tetrahydrofuran (THF), Chloroform, Petrolether, Heptan, Cyclohexan, Ethylacetat, Methylacetat, Isopropanol, Ethanol, Methanol, t-Butanol, Aceton, Toluol, Benzol, Methylethylketon, Diethylether oder p-Dioxan. Als Lösungsmittel ist auch Wasser geeignet, jedoch nur in Mischung mit geeigneten organischen Lösungsmitteln. Oben genannte Lösungsmittel können alleine oder in Mischungen mit verschiedenen Verhältnissen für die Polymerisation verwendet werden. Bevorzugte Lösungsmittel sind Ethylacetat, Methylacetat, Aceton, Methylethylketon, Ethanol und Isopropanol. Besonders bevorzugt werden Lösungsmittelgemische mit Isopropanol; am meisten bevorzugt wird ein Gemisch aus Ethylacetat und Isopropanol.

Die Polymerisation kann unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Vorzugsweise wird so vorgegangen, dass 3 bis 40 Gew.-%, bezogen auf das Gesamtgewicht der Monomere, eines Gemisches aus den Monomeren a) (= Silikonmakromer), b) (= ungesättigter Polyether) und gegebenenfalls c) (= organisches Monomer) in den gewünschten Mengenverhältnissen vorgelegt werden und der Rest der Monomere a), b) und gegebenenfalls c) als Gemisch zudosiert wird. Weiter ist bevorzugt, den Initiator teilweise, vorzugsweise zu 3 bis 50 Gew.-%, vorzulegen, und den Rest zuzudosieren. Besonders bevorzugt werden die Monomere a), b) und gegebenenfalls c) so zugegeben, dass deren Verhältnis zu jedem Zeitpunkt der Polymerisation stets konstant bleibt.

Nach Abschluß der Polymerisation kann zur Restmonomerentfernung in Anwendung bekannter Methoden nachpolymerisiert werden. Flüchtige Restmonomere und weitere flüchtige Bestandteile können auch mittels Destillation, vorzugsweise unter reduziertem Druck, entfernt werden.

Die Aufarbeitung der hydrophilen Silikonorganocopolymere erfolgt je nach Zusammensetzung und damit je nach deren Eigenschaften.
Die hydrophilen Silikonorganocopolymere können als 100 %-System isoliert werden, das heißt das gesamte Lösungsmittel wird entfernt. Es ist auch möglich, die hydrophilen Silikonorganocopolymere in Lösung zu verwenden. Dabei kann entweder das zur Polymerisation bereits eingesetzte Lösungsmittel(gemisch) verwendet werden, oder aber es findet ein Austausch des Lösemittels statt. Letztere Variante wird beispielsweise bevorzugt bei wasserlöslichen bzw. wasserdispergierbaren hydrophilen Silikonorganocopolymeren angewendet. Hier wird das organische Lösungsmittel solange abdestilliert und sukzessive gegen Wasser ersetzt, bis das gesamte Lösungsmittel gegen Wasser ausgetauscht wurde.

Aufgrund der vielfältigen Möglichkeiten der Zusammensetzung der erfindungsgemäßen hydrophilen Silikonorganocopolymeren und deren einzigartige Kombination von hydrophilen Polyetherblöcken neben hydrophoben Silikonketten, sind diese Produkte für sehr viele Anwendungen bestens geeignet:

Die hydrophilen Silikonorganocopolymere werden als Dispergier-und Emulgiermittel verwendet; vorzugsweise als Stabilisierungsmittel oder Schutzkolloid. So können zum Beispiel Silikonölemulsionen damit stabil gehalten werden, oder aber die Stabilität von Polyurethanschäumen wird damit drastisch erhöht. Auch bei der Emulsionspolymerisation können die hydrophilen Silikonorganocopolymere als Stabilisator bzw. Schutzkolloid zugesetzt werden.

Die hydrophilen Silikonorganocopolymere eignen sich außerdem als Bestandteil oder Additiv für Kosmetika, wie Haarsprays, Cremes, Lotionen, Gele, Hair conditioner oder Haarfixiermittel.

Die hydrophilen Silikonorganocopolymere eignen sich ferner als Trenn- und Beschichtungsmittel, beispielsweise zur Herstellung von abhäsiven (nicht klebenden) Überzügen im Release-Coating-Bereich. Sie sind auch geeignet zur Beschichtung von Textil, Papier, Holz, Kunststoffen oder Folien und Metallen, zum Beispiel als Schutzbeschichtung oder als Antifouling-Beschichtung.

Weitere Anwendungsgebiete sind im Baubereich als Additiv in zementären und nichtzementären Systemen und im Bautenschutz, insbesondere zur Herstellung von witterungsbeständigen Beschichtungen oder Dichtstoffen.

Die hydrophilen Silikonorganocopolymere werden sehr vorteilhaft auch im Polish-Bereich eingesetzt. Die hydrophilen Silikonorganocopolymere werden auch als Additiv in Antischaumförmulierungen eingesetzt, da sie - je nach Zusammensetzung - eine entschäumende Wirkung haben können. In diesem Zusammenhang ist auch der Einsatz der hydrophilen Silikonorganocopolymere als Entschäumer in Farben und Lacken zu nennen. Die hydrophilen Silikonorganocopolymere sind - je nach Zusammensetzung und je nach dem System, wo sie eingesetzt werden - auch als Modifizierungs-, Hydrophilierungs- oder Hydrophobierungsmittel bestens geeignet.

Besonders geeignet sind die hydrophilen Silikonorganocopolymere jedoch als hydrophil machende Weichmacher für Textilien. Künstlich hergestellte Fasern (wie Polyester-, Polyamid- oder Polyolefin-Fasern) sind oft so hydrophob, dass kein Wasser bzw. kein Schweiß aufgesogen werden kann. Diese für den Träger solcher Textilien sehr unangenehme Eigenschaft kann durch Behandlung der Textilfasern oder der Textilien mit den erfindungsgemäßen hydrophilen Silikonorganocopolymeren komplett beseitigt werden. Die Textilien werden dadurch hydrophil gemacht, Schweiß kann aufgesogen werden, und ferner erhalten die Textilien einen angenehmen Weichgriff. Die hydrophilen Silikonorganocopolymere eignen sich auch als Anti-Wrinkling Agent im Textilbereich, das heißt das Knittern der Textilien wird dadurch vermieden. Die hydrophilen Silikonorganocopolymere empfehlen sich für die Behandlung von Papier, zum Beispiel im Tissue-Bereich, wo sie für einen weichen Effekt auf einem Papiertaschentuch sorgen.

Die nachfolgenden Beispiele dienen zur weiteren Erläuterung der Erfindung, ohne diese in irgendeiner Weise einzuschränken:

### Beispiel 1:

In einem 31-Glasrührtopf mit Ankerrührer, Rückflußkühler und Dosiereinrichtungen wurden 1100.00 g Ethylacetat, 176.51 g Isopropanol, 22.89 g Polyethylenglykol-Polypropylenglykol-Mono-Methacrylat mit 20 EO-Einheiten und 20 PO-Einheiten, 17.17 g Methylacrylat, 17.17 g α,ω-Di-(3-Methacryloxypropyl)-Polydimethylsiloxan mit Kettenlänge (Zahl der SiOMe₂-Wiederholungseinheiten) von 135 und 3.05 g PPV (t-Butylperpivalat, 75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (85.83 g Ethylacetat und 12.21 g PPV (75 %-ige Lösung in Aliphaten)) mit einer Rate von 21.37 ml/h gestartet. Zehn Minuten nach dem Start der Initiatordosierung wurde die Monomerdosierung 1 (77.24 g Methylacrylat und 154.49 g α,ω-Di-(3-Methacryloxypropyl)-Polydimethylsiloxan mit Kettenlänge (Zahl der SiOMe₂-Wiederholungseinheiten) von 135) mit einer Rate von 60.54 ml/h, und die Monomerdosierung 2 (205.98 g Polyethylenglykol-Polypropylenglykol-Mono-Methacrylat mit 20 EO-Einheiten und 20 PO-Einheiten und 77.24 g Methylacrylat) mit einer Rate von 72.26 ml/h eingefahren. Die Initiatordosierung erstreckte sich über einen Zeitraum von 310 Min, die beiden Monomerdosierungen liefen 240 Minuten (nebeneinander). Nach Ende der Dosierungen wurde noch 60 Min bei 70°C nachpolymerisiert. Die erhaltene Polymerlösung wurde anschließend vollständig eingeengt, d.h. das Lösemittel wurde komplett entfernt. Es blieb ein hydrophiles Silikonorganocopolymer in Form eines fast transparenten Öls zurück.

Analysen des hydrophilen Silikonorganocopolymers (Reinform): FG: 99.9 %, Viskosität (Höppler, 10 %-ige Lösung in Ethylacetat) = 2.4 mPas, DSC-Messung: keine Schmelz-/Kristallisationspunkte, Glasübergangstemperatur Tg = -60.4 °C; gewichtsmittleres Molekulargewicht aus GPC: M_{w} = 133800 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe (ca. 40 Gew.-% Polyether-Anteil, ca. 30 Gew.-% Silikonanteil, ca. 30 Gew.-% Anteil an Polymethylacrylat).
Eigenschaften einer wässrigen Lösung des hydrophilen Silikonorganocopolymeren: Festgehalt: 34.22 %; kolloidal trübe Lösung; Brookfield-Viskosität 20 (Spindel 2): 83 mPas; mittlere Teilchengröße (Nanosizer): 165 nm; Coulter: Dn (zahlenmittlerer Partikeldurchmesser) 0.091 µm; Dv (volumenmittlerer Partikeldurchmesser) 0.145 µm; Oberfläche 47.8 m²;
Statische Oberflächenspannung σ einer 1 %-igen wässrigen Lösung: 27.5 mN/m.

### Beispiel 2:

In einem 31-Glasrührtopf mit Ankerrührer, Rückflußkühler und Dosiereinrichtungen wurden 431.47 g Ethylacetat, 208.00 g Isopropanol, 20.04 g α,ω-Di-(3-Methacryloxypropyl)-Polydimethylsiloxan mit mittlerer Kettenlänge von 168, 21.05 g Polyethylenglykol-Mono-Methacrylat mit 10 EO, 21.05 g Polypropylenglykol-Mono-Methacrylat mit 9 PO, 14.03 g Hydroxyethylacrylat (HEA), 4.01 Glycidylmethacrylat (GMA) und 5.92 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (53.87 g Ethylacetat und 22.97 g PPV (75 %-ige Lösung in Aliphaten)) mit einer Rate von 17.35 ml/h gestartet. Zehn Minuten nach dem Start der Initiatordosierung wurde die Monomerdosierung (160.52 g α,ω-Di-(3-Methacryloxypropyl)-Polydimethylsiloxan mit mittlerer Kettenlänge von 168, 168.55 g Polyethylenglykol-Mono-Methacrylat mit 10 EO, 168.55 g Polypropylenglykol-Mono-Methacrylat mit 9 PO, 112.37 g Hydroxyethylacrylat (HEA) und 32.10 g Glycidylmethacrylat (GMA)) mit einer Rate von 160.52 g/h eingefahren. Die Initiatordosierung erstreckte sich über einen Zeitraum von 310 Minuten, die Monomerdosierung lief 240 Minuten. Nach Ende der Dosierungen wurde noch 60 Minuten bei 70°C nachpolymerisiert. Die erhaltene Polymerlösung wurde anschließend vollständig eingeengt, d.h. das Lösemittel wurde komplett entfernt. Es blieb ein hydrophiles Silikonorganocopolymer in Form eines fast transparenten Öls zurück.

Analysen des hydrophilen Silikonorganocopolymers (Reinform): FG: 99.8 %, Viskosität (Höppler, 10 %-ige Lösung in Ethylacetat) = 2.6 mPas, DSC-Messung: keine Schmelz-/Kristallisationspunkte, Glasübergangstemperatur Tg = -40.6 °C; gewichtsmittleres Molekulargewicht aus GPC: M_{W} = 120000 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Eigenschaften einer wässrigen Lösung des hydrophilen Silikonorganocopolymeren: Festgehalt: 30.5 %; kolloidal leicht trübe Lösung (fast transparent); Brookfield-Viskosität 20 (Spindel 2): 96 mPas; mittlere Teilchengröße (Nanosizer): 121 nm; Coulter: Dn 0.041 µm; Dv 0.105 µm; Oberfläche 69.8 m²;
Statische Oberflächenspannung σ einer 1 %-igen wässrigen Lösung: 31.8 mN/m.
Bemerkung: Das hydrophile Silikonorganocopolymer konnte sehr gut in Wasser gelöst/dispergiert werden.

### Beispiel 3:

In einem 21-Glasrührtopf mit Ankerrührer, Rückflußkühler und Dosiereinrichtungen wurden 730.36 g Ethylacetat, 117.68 g Isopropanol, 152.58 g Polyglykolether mit 20 EO und 20 PO und endgruppenfunktionalisiert mit einer Allylgruppe, 19.07 g Vinylacetat, 114.43 g α,ω-Divinylfunktionalisiertes Polydimethylsiloxan mit ca. 133 SiOMe₂-Wiederholungseinheiten, und 2.03 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (57.22 g Ethylacetat und 8.14 g PPV (75 %-ige Lösung in Aliphaten)) mit einer Rate von 14.25 ml/h gestartet. Zehn Minuten nach dem Start der Initiatordosierung wurde die Monomerdosierung (95.36 g Vinylacetat) mit einer Rate von 25.64 ml/h eingefahren. Die Initiatordosierung erstreckte sich über einen Zeitraum von 310 Minuten, die Monomerdosierung lief 240 Minuten. Nach Ende der Dosierungen wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines trüben, leicht transparenten Öls zurück.

Analysen des hydrophilen Silikonorganocopolymers (Reinform): FG: 99.8 %, DSC-Messung: keine Schmelz-/Kristallisationspunkte, Glasübergangstemperatur Tg = -55.9°C; gewichtsmittleres Molekulargewicht aus GPC: M_{W} = 18700 g/mol.
1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Eigenschaften einer wässrigen Lösung des hydrophilen Silikonorganocopolymeren: Festgehalt: 28.1 %; kolloidal trübe Lösung; Brookfield-Viskosität 20 (Spindel 2): 20 mPas; mittlere Teilchengröße (Nanosizer): 126 nm; Coulter: Dn 0.074 µm; Dv 0.100 µm; Oberfläche 67.5 m²;
Statische Oberflächenspannung σ einer 1 %-igen wässrigen Lösung: 28.8 mN/m.

### Beispiel 4:

In einem 21-Glasrührtopf mit Ankerrührer, Rückflußkühler und Dosiereinrichtungen wurden 733.36 g Ethylacetat, 118.16 g Isopropanol, 153.21 g Polyglykolether mit 20 EO und 20 PO und endgruppenfunktionalisiert mit einer Allylgruppe, 25.55 g Vinylacetat, 76.6 g α,ω-Divinylfunktionalisiertes Polydimethylsiloxan mit ca. 100 SiOMe₂-Wiederholungseinheiten und 2.04 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (57.45 g Ethylacetat und 8.17 g PPV (75 %-ige Lösung in Aliphaten)) mit einer Rate von 14.31 ml/h·gestartet. Zehn Minuten nach dem Start der Initiatordosierung wurde die Monomerdosierung (127.66 g Vinylacetat) mit einer Rate von 34.32 ml/h eingefahren. Die Initiatordosierung erstreckte sich über einen Zeitraum von 310 Minuten, die Monomerdosierung lief 240 Minuten. Nach Ende der Dosierungen wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines trüben Öls zurück.

Analysen des hydrophilen Silikonorganocopolymers (Reinform): FG: 99.9 %, DSC-Messung: keine Schmelz-/Kristallisationspunkte, Glasübergangstemperatur Tg = -49.6 °C; gewichtsmittleres Molekulargewicht aus GPC: M_{W} = 14400 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Eigenschaften einer wässrigen Lösung des hydrophilen Silikonorganocopolymeren: Festgehalt: 28.8 %; kolloidal trübe Lösung; Brookfield-Viskosität 20 (Spindel 2): 24 mPas; mittlere Teilchengröße (Nanosizer): 165 nm; Coulter: Dn 0.088 µm; Dv 0.138 µm; Oberfläche 50.3 m²;
Statische Oberflächenspannung σ einer 1 %-igen wässrigen Lösung: 29.7 mN/m.

### Beispiel 5:

In einem 21-Glasrührtopf mit Ankerrührer, Rückflußkühler und Dosiereinrichtungen wurden 721.49 g Ethylacetat, 116.25 g Isopropanol, 301.45 g Polyglykolether mit 20 EO und 20 PO und endgruppenfunktionalisiert mit einer Allylgruppe, 75.36 g α,ω-Divinylfunktionalisiertes Polydimethylsiloxan mit ca. 133 SiO-Me₂-Wiederholungseinheiten und 2.01 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (56.52 g Ethylacetat und 8.04 g PPV (75 %-ige Lösung in Aliphaten)) mit einer Rate von 14.07 ml/h gestartet. Die Initiatordosierung erstreckte sich über einen Zeitraum von 310 Minuten. Nach Ende der Dosierung wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines trüben Öls (leichte Transparenz) zurück.

Analysen des hydrophilen Silikonorganocopolymers (Reinform): FG: 99.7 %, DSC-Messung: keine Schmelz-/Kristallisationspunkte, Glasübergangstemperatur Tg = -71.5 °C; gewichtsmittleres Molekulargewicht aus GPC: M_{W} = 10000 g/mol.
1H-NMR-Spektroskopie: Die Doppelbindungen des ungesättigten Silikonmakromeren waren vollständig einpolymerisiert. Die mit Hilfe der NMR ermittelte Zusammensetzung des hydrophilen Silikonorganocopolymers entsprach im Rahmen der Messgenauigkeit der Zusammensetzung der Ausgangsstoffe.
Eigenschaften einer wässrigen Lösung des hydrophilen Silikonorganocopolymeren: Festgehalt: 28.6 %; milchig trübe Lösung; Brookfield-Viskosität 20 (Spindel 2): 17 mPas; mittlere Teilchengröße (Nanosizer): 247 nm; Coulter: Dn 0.118 µm; Dv 1.178 µm; Oberfläche 17.9 m²;
Statische Oberflächenspannung σ einer 1 %-igen wässrigen Lösung: 34.6 mN/m.
Bemerkung: stabile Lösung bzw. Dispersion; insgesamt gute Löslichkeit/Dispergierbarkeit in Wasser.

### Beispiel 6:

In einem 21-Glasrührtopf mit Ankerrührer, Rückflußkühler und Dosiereinrichtungen wurden 667.39 g Ethylacetat, 116.67 g Isopropanol, 245.82 g Polyglykolether mit 20 EO und 20 PO und endgruppenfunktionalisiert mit einer Allylgruppe, 0.95 g Acrylsäure, 113.46 g α,ω-Divinylfunktionalisiertes Polydimethylsiloxan mit ca. 133 SiOMe₂-Wiederholungseinheiten und 2.02 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (56.73 g Ethylacetat und 8.07 g PPV (75 %-ige Lösung in Aliphaten)) mit einer Rate von 14.13 ml/h gestartet. Zehn Minuten nach dem Start der Initiatordosierung wurde die Monomerdosierung (17.96 g Acrylsäure und 56.73 g Ethylacetat) mit einer Rate von 20.01 ml/h eingefahren. Die Initiatordosierung erstreckte sich über einen Zeitraum von 310 Minuten, die Monomerdosierung lief 240 Minuten. Nach Ende der Dosierung wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines trüben Öls zurück.

Analysen des hydrophilen Silikonorganocopolymers (Reinform): FG: 99.8 %, DSC-Messung: keine Schmelz-/Kristallisationspunkte, Glasübergangstemperatur Tg = -68.2 °C; gewichtsmittleres Molekulargewicht aus GPC: M_{W} = 17500 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Eigenschaften einer wässrigen Lösung des hydrophilen Silikonorganocopolymeren: Festgehalt: 25.2 %; kolloidal leicht trübe Lösung; Brookfield-Viskosität 20 (Spindel 2): 15 mPas; mittlere Teilchengröße (Nanosizer): 135 nm; Coulter: Dn 0.090 µm; Dv 0.117 µm; Oberfläche 67.9 m²;
Statische Oberflächenspannung σ einer 1 %igen wässrigen Lösung: 38.6 mN/m.
Bemerkung: stabile Lösung bzw. Dispersion; insgesamt sehr gute Löslichkeit/Dispergierbarkeit in Wasser.

### Beispiel 7:

Es wurde wie in Beispiel 6 vorgegangen mit dem Unterschied, dass anstelle von Acrylsäure die gleiche Menge an Diallyldimethylammoniumchlorid (DADMAC) als 64 %ige Lösung in Wasser verwendet wurde.
Es blieb ein hydrophiles Silikonorganocopolymer in Form eines trüben Öls zurück.
Analysen des hydrophilen Silikonorganocopolymers (Reinform): FG: 99.7 %, DSC-Messung: keine Schmelz-/Kristallisationspunkte, Glasübergangstemperatur Tg = -71.5 °C; gewichtsmittleres Molekulargewicht aus GPC: M_{W} = 21600 g/mol.
Eigenschaften einer wässrigen Lösung des hydrophilen Silikonorganocopolymeren: Festgehalt: 30.0 %; kolloidal trübe Lösung; Brookfield-Viskosität 20 (Spindel 2): 16 mPas; mittlere Teilchengröße (Nanosizer): 301 nm; Coulter: Dn 0.267 µm; Dv 0.443 µm; Oberfläche 67.9 m²;
Statische Oberflächenspannung σ einer 1 %igen wässrigen Lösung: 16.7 mN/m.
Bemerkung: stabile Lösung bzw. Dispersion; insgesamt sehr gute Löslichkeit/Dispergierbarkeit in Wasser.

### Beispiel 8:

In einem 21-Glasrührtopf mit Ankerrührer, Rückflußkühler und Dosiereinrichtungen wurden 842.92 g Ethylacetat, 131.52 g Isopropanol, 198.7 g Polyglykolether mit 20 EO und 20 PO und endgruppenfunktionalisiert mit einer Allylgruppe, 24.84 g α,ω-Divinylfunktionalisiertes Polydimethylsiloxan mit ca. 177 SiO-Me₂-Wiederholungseinheiten und 1.32 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (37.26 g Ethylacetat und 5.30 g PPV (75 %-ige Lösung in Aliphaten)) mit einer Rate von 9.28 ml/h gestartet. Zehn Minuten nach dem Start der Initiatordosierung wurde die Monomerdosierung (24.84 g α,ω-Divinylfunktionalisiertes Polydimethylsiloxan mit ca. 177 SiOMe₂-Wiederholungseinheiten) mit einer Rate von 8.28 ml/h eingefahren. Die Initiatordosierung erstreckte sich über einen Zeitraum von 310 Minuten, die Monomerdosierung lief 180 Minuten. Nach Ende der Initiatordosierung wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines nahezu transparenten Öls zurück.

Analysen des hydrophilen Silikonorganocopolymers (Reinform): FG: 99.9 %, DSC-Messung: keine Schmelz-/Kristallisationspunkte, Glasübergangstemperatur Tg = -71.4 °C; gewichtsmittleres Molekulargewicht aus GPC: M_{W} = 11200 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Eigenschaften einer wässrigen Lösung des hydrophilen Silikonorganocopolymeren: Festgehalt: 28.4 %; fast transparente Lösung (minimale kolloidale Trübung); Brookfield-Viskosität 20 (Spindel 2): 19 mPas; mittlere Teilchengröße (Nanosizer): 168 nm; Coulter: Dn 0.082 µm; Dv 0.13 µm; Oberfläche 54.3 m²; Statische Oberflächenspannung σ einer 1 %-igen wässrigen Lösung: 34.5 mN/m.
Bemerkung: stabile Lösung bzw. Dispersion; insgesamt sehr gute Löslichkeit/Dispergierbarkeit in Wasser.

### Beispiel 9:

In einem 21-Glasrührtopf mit Ankerrührer, Rückflußkühler und Dosiereinrichtungen wurden 32.99 g Butyraldehyd, 577.37 g Polyglykolether mit 20 EO und 20 PO und endgruppenfunktionalisiert mit einer Allylgruppe, 49.49 g α,ω-Divinylfunktionalisiertes Polydimethylsiloxan mit ca. 133 SiOMe₂-Wiederholungseinheiten, 4.12 g Vinylacetat und 2.20 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (19.8 g PPV (75 %-ige Lösung in Aliphaten)) mit einer Rate von 4.89 ml/h gestartet. Zehn Minuten nach dem Start der Initiatordosierung wurde die Monomerdosierung 1 (197.96 g α,ω-Divinylfunktionalisiertes Polydimethylsiloxan mit ca. 133 SiO-Me₂-Wiederholungseinheiten) mit einer Rate von 68.03 ml/h und die Monomerdosierung 2 (49.49 g Butyraldehyd und 37.12 g Vinylacetat) mit einer Rate von 34.37 ml/h eingefahren. Die Initiatordosierung erstreckte sich über einen Zeitraum von 300 Minuten, die beiden Monomerdosierungen liefen 180 Minuten. Nach Ende der Initiatordosierung wurde noch 60 Minuten bei 70°C nachpolymerisiert. Abschließend wurde unter Vakuum destilliert, um die flüchtigen Anteile - wie das Phlegmatisierungsmittel des Initiators - auszutreiben. Es blieb ein hydrophiles Silikonorganocopolymer in Form eines trüben Öls zurück.

Analysen des hydrophilen Silikonorganocopolymers (Reinform): FG: 99.8 %, DSC-Messung: keine Schmelz-/Kristallisationspunkte, Glasübergangstemperatur Tg = -67.8 °C; gewichtsmittleres Molekulargewicht aus GPC: M_{W} = 15900 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe. Die Löslichkeit in Wasser wurde nicht untersucht.

### Beispiel 10:

In einem 21-Glasrührtopf mit Ankerrührer, Rückflußkühler und Dosiereinrichtungen wurden 344.39 g Ethylacetat, 69.14 g Isopropanol, 51.36 g Polyglykolether mit 20 EO und 20 PO und endgruppenfunktionalisiert mit einer Allylgruppe, 15.80 g α,ω-Divinylfunktionalisiertes Polydimethylsiloxan mit ca. 177 SiO-Me₂-Wiederholungseinheiten, 11.85 g Vinylacetat und 4.21 g PPV (75 %-ige Lösung in Aliphaten) vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (118.53 g Ethylacetat und 16.86 g PPV (75 %-ige Lösung in Aliphaten)) mit einer Rate von 29.51 ml/h gestartet. Zehn Minuten nach dem Start der Initiatordosierung wurde die Monomerdosierung 1 (142.23 g α,ω-Divinylfunktionalisiertes Polydimethylsiloxan mit ca. 177 SiOMe₂-Wiederholungseinheiten und 106.68 g Vinylacetat) mit einer Rate von 64.24 ml/h und die Monomerdosierung 2 (462.26 g Polyglykolether mit 20 EO und 20 PO und endgruppenfunktionalisiert mit einer Allylgruppe) mit einer Rate von 115.56 ml/h eingefahren. Die Initiatordosierung erstreckte sich über einen Zeitraum von 310 Minuten, die beiden Monomerdosierungen liefen 240 Minuten. Nach Ende der Initiatordosierung wurde noch 60 Minuten bei 70°C nachpolymerisiert. Die erhaltene Polymerlösung wurde anschließend vollständig eingeengt, d.h. das Lösemittel wurde vollständig entfernt. Es blieb ein hydrophiles Silikonorganocopolymer in Form eines leicht trüben Öls zurück.

Analysen des hydrophilen Silikonorganocopolymers (Reinform): FG: 99.8 %, DSC-Messung: keine Schmelz-/Kristallisationspunkte, Glasübergangstemperatur Tg = -67.0 °C; gewichtsmittleres Molekulargewicht aus GPC: M_{W} = 21400 g/mol. 1H-NMR-Spektroskopie: Es waren keine freien Doppelbindungen erkennbar. Die mit Hilfe der NMR ermittelte Zusammensetzung des hydrophilen Silikonorganocopolymers entsprach im Rahmen der Messgenauigkeit der Zusammensetzung der Ausgangsstoffe.

## Patentansprüche

1. Hydrophile Silikonorganocopolymere erhältlich mittels radikalischer Polymerisation in Substanz oder Lösung von einem oder mehreren Silikonmakromeren mit jeweils mindestens einer ungesättigten Gruppe, und einem oder mehreren Polyethern mit jeweils mindestens einer ungesättigten Gruppe, sowie gegebenenfalls einem oder mehreren ethylenisch ungesättigten Monomeren.

2. Hydrophile Silikonorganocopolymere gemäß Anspruch 1, **dadurch gekennzeichnet, dass** als Silikonmakromere lineare, verzweigte, cyclische und dreidimensional vernetzte Polysiloxane mit mindestens 5 Siloxanwiederholungseinheiten und mit mindestens einer radikalisch polymerisierbaren funktionellen Gruppe eingesetzt werden.

3. Hydrophile Silikonorganocopolymere gemäß Anspruch 1, **dadurch gekennzeichnet, dass** als Silikonmakromere Silikone mit der allgemeinen Formel R¹ₐR₃₋ₐSiO(SiR₂O)ₙSiR₃₋ₐR¹ₐ eingesetzt werden, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, wobei wenigstens ein a = 1 ist, und n = 5 bis 10000 beträgt.

4. Hydrophile Silikonorganocopolymere gemäß Anspruch 1, **dadurch gekennzeichnet, dass** als Silikonmakromere ein oder mehrere eingesetzt werden aus der Gruppe umfassend α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α,ω-Di-(Acryloxymethyl)-Polydimethylsiloxane, α,ω-Di-(Methacryloxymethyl)-Polydimethylsiloxane, α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane.

5. Hydrophile Silikonorganocopolymere gemäß Anspruch 1 bis 4, **dadurch gekennzeichnet, dass** als Polyether mit mindestens einer ungesättigten Gruppe Polyalkylenoxide eingesetzt werden, mit mindestens 3 Wiederholungseinheiten, die eine oder mehrere zur Polymerisation geeignete Alkenylgruppen besitzen.

6. Hydrophile Silikonorganocopolymere gemäß Anspruch 5, **dadurch gekennzeichnet, dass** als Polyether mit mindestens einer ungesättigten Gruppe ein oder mehrere eingesetzt werden aus der Gruppe umfassend Polyethylenglykol-Divinylether, Polyethylenglykol-Diallylether, Polypropylenglykol-Divinylether, Polypropylenglykol-Diallylether, Polyethylenglykol-Di(meth)acrylat, Polypropylenglykol-Di(meth)-acrylat, Polyethylenglykol-mono-vinylether, Polyethylenglykol-mono-allylether, Polyethylenglykol-mono-acrylat, Polyethylenglykol-mono-methacrylat, Polypropylenglykol-mono-acrylat, Polypropylenglykol-mono-methacrylat, Polyethylenglykol-Polypropylenglykol-mono-vinylether, Polyethylenglykol-Polypropylenglykol-mono-allylether, Polyethylenglykol-Polypropylenglykol-mono-acrylat, Polyethylenglykol-Polypropylenglykol-mono-methacrylat.

7. Hydrophile Silikonorganocopolymere gemäß Anspruch 1 bis 6, **dadurch gekennzeichnet, dass** als ethylenisch ungesättigte Monomere ein oder mehrere Monomere eingesetzt werden, aus der Gruppe umfassend Vinylester von unverzweigten oder verzweigten Alkylcarbonsäuren mit 1 bis 15 C-Atomen, (Meth)acrylsäureester von Alkoholen mit 1 bis 15 C-Atomen, (Meth)acrylamide, Vinylaromaten, Olefine, Diene, Vinylhalogenide, Vinylketone, Vinylether, polymerisierbare Silane, ungesättigte Mono- und Dicarbonsäuren oder deren Salze, ethylenisch ungesättigte Carbonsäureamide und - nitrile, Mono- und Diester der Fumar- und Maleinsäure, ethylenisch ungesättigte Sulfonsäuren und deren Salze, ethylenisch ungesättigte phosphorhaltige Monomere und kationische Monomere.

8. Hydrophile Silikonorganocopolymere gemäß Anspruch 1 bis 7, **dadurch gekennzeichnet, dass** 5 bis 60 Gew.-% Silikonmakromer, 30 bis 90 Gew.-% Polyether mit mindestens einer ungesättigten Gruppe und gegebenenfalls 5 bis 50 Gew.-% ethylenisch ungesättigtes Monomer copolymerisiert werden, wobei sich die Angaben in Gew.-% auf das Gesamtgewicht der Monomere beziehen und sich jeweils auf 100 Gew.-% aufaddieren.

9. Verfahren zur Herstellung von hydrophilen Silikonorganocopolymeren gemäß Anspruch 1 bis 8 mittels radikalischer Polymerisation in Substanz oder Lösung von einem oder mehreren Silikonmakromeren mit jeweils mindestens einer ungesättigten Gruppe, und einem oder mehreren Polyethern mit jeweils mindestens einer ungesättigten Gruppe, sowie gegebenenfalls einem oder mehreren ethylenisch ungesättigten Monomeren.

10. Verwendung der hydrophilen Silikonorganocopolymere gemäß Anspruch 1 bis 8 als Dispergier- und Emulgiermittel.

11. Verwendung der hydrophilen Silikonorganocopolymere gemäß Anspruch 1 bis 8 als Bestandteil oder Additiv für Kosmetika.

12. Verwendung der hydrophilen Silikonorganocopolymere gemäß Anspruch 1 bis 8 als Trenn- und Beschichtungsmittel.

13. Verwendung der hydrophilen Silikonorganocopolymere gemäß Anspruch 1 bis 8 als Additiv in zementären und nichtzementären Systemen und im Bautenschutz.

14. Verwendung der hydrophilen Silikonorganocopolymere gemäß Anspruch 1 bis 8 im Polish-Bereich und als Additiv in Antischaumformulierungen.

15. Verwendung der hydrophilen Silikonorganocopolymere gemäß Anspruch 1 bis 8 als Modifizierungs-, Hydrophilierungs-oder Hydrophobierungsmittel.

16. Verwendung der hydrophilen Silikonorganocopolymere gemäß Anspruch 1 bis 8 im Textilbereich als hydrophil machende Weichmacher und als Anti-Wrinkling Agent.

17. Verwendung der hydrophilen Silikonorganocopolymere gemäß Anspruch 1 bis 8 für die Behandlung von Papier.

## Claims

1. Hydrophilic organofunctional silicone copolymers obtainable by means of free radical polymerization, in the absence of a solvent or in solution, of one or more silicone macromers having in each case at least one unsaturated group and one or more polyethers having in each case at least one unsaturated group and optionally one or more ethylenically unsaturated monomers.

2. Hydrophilic organofunctional silicone copolymers according to claim 1, **characterized in that** the silicone macromers used are linear, branched, cyclic and three-dimensionally crosslinked polysiloxanes having at least 5 repeating siloxane units and having at least one functional group capable of free radical polymerization.

3. Hydrophilic organofunctional silicone copolymers according to claim 1, **characterized in that** the silicone macromers used are silicones having the general formula R¹ₐR₃₋ₐSiO(SiR₂O)ₙSiR₃₋ₐR¹ₐ in which R is identical or different and is a monovalent, optionally substituted alkyl radical or alkoxy radical having in each case 1 to 18 C atoms, R¹ is a polymerizable group, a is 0 or 1, at least one a being 1, and n is from 5 to 10 000.

4. Hydrophilic organofunctional silicone copolymers according to claim 1, **characterized in that** the silicone macromers used are one or more from the group consisting of α,ω-divinylpolydimethylsiloxanes, α,ω-di(3-acryloyloxypropyl)polydimethylsiloxanes, α,ω-di(3-methacryloyloxypropyl)polydimethylsiloxanes, α,ω-di(acryloyloxymethyl)polydimethylsiloxanes, α,ω-di(methacryloyloxymethyl)polydimethylsiloxanes, α-monovinylpolydimethylsiloxanes, α-mono(3-acryloyloxypropyl)polydimethylsiloxanes, α-mono(acryloyloxymethyl)polydimethylsiloxanes and α-mono(3-methacryloyloxypropyl)polydimethylsiloxanes.

5. Hydrophilic organofunctional silicone copolymers according to claims 1 to 4, **characterized in that** polyalkylene oxides which have at least 3 repeating units and have one or more alkenyl groups suitable for polymerization are used as polyethers having at least one unsaturated group.

6. Hydrophilic organofunctional silicone copolymers according to claim 5, **characterized in that** one or more polyethers from the group consisting of polyethylene glycol divinyl ether, polyethylene glycol diallyl ether, polypropylene glycol divinyl ether, polypropylene glycol diallyl ether, polyethylene glycol di(meth)acrylate, polypropylene glycol di(meth)acrylate, polyethylene glycol monovinyl ether, polyethylene glycol monoallyl ether, polyethylene glycol monoacrylate, polyethylene glycol monomethacrylate, polypropylene glycol monoacrylate, polypropylene glycol monomethacrylate, polyethylene glycol polypropylene glycol monovinyl ether, polyethylene glycol polypropylene glycol monoallyl ether, polyethylene glycol polypropylene glycol monoacrylate and polyethylene glycol polypropylene glycol monomethacrylate are used as polyethers having at least one unsaturated group.

7. Hydrophilic organofunctional silicone copolymers according to claims 1 to 6, **characterized in that** the ethylenically unsaturated monomers used are one or more monomers from the group consisting of vinyl esters of straight-chain or branched alkylcarboxylic acids having 1 to 15 C atoms, (meth)acrylates of alcohols having 1 to 15 C atoms, (meth)acrylamides, vinylaromatics, olefins, dienes, vinyl halides, vinyl ketones, vinyl ethers, polymerizable silanes, unsaturated mono-and dicarboxylic acids or salts thereof, ethylenically unsaturated carboxamides and carbonitriles, mono- and diesters of fumaric and maleic acid, ethylenically unsaturated sulfonic acids and salts thereof, ethylenically unsaturated phosphorus-containing monomers and cationic monomers.

8. Hydrophilic organofunctional silicone copolymers according to claims 1 to 7, **characterized in that** from 5 to 60% by weight of silicone macromer, from 30 to 90% by weight of polyether having at least one unsaturated group and optionally from 5 to 50% by weight of ethylenically unsaturated monomer are copolymerized, the data in % by weight being based on the total weight of the monomers and summing in each case to 100% by weight.

9. Process for the preparation of hydrophilic organofunctional silicone copolymers according to claims 1 to 8 by means of free radical polymerization, in the absence of a solvent or in solution, of one or more silicone macromers having in each case at least one unsaturated group and one or more polyethers having in each case at least one unsaturated group and optionally one or more ethylenically unsaturated monomers.

10. Use of the hydrophilic organofunctional silicone copolymers according to claims 1 to 8 as dispersants and emulsifiers.

11. Use of the hydrophilic organofunctional silicone copolymers according to claims 1 to 8 as a constituent or additive for cosmetics.

12. Use of the hydrophilic organofunctional silicone copolymers according to claims 1 to 8 as release agents and coating materials.

13. Use of the hydrophilic organofunctional silicone copolymers according to claims 1 to 8 as an additive in cement-containing and non-cement-containing systems and in the protection of structures.

14. Use of the hydrophilic organofunctional silicone copolymers according to claims 1 to 8 in the polish sector and as an additive in antifoam formulations.

15. Use of the hydrophilic organofunctional silicone copolymers according to claims 1 to 8 as modifiers, hydrophilizing agents or water repellants.

16. Use of the hydrophilic organofunctional silicone copolymers according to claims 1 to 8 in the textile sector as a hydrophilizing softener and as an anti-wrinkling agent.

17. Use of the hydrophilic organofunctional silicone copolymers according to claims 1 to 8 for the treatment of paper.

## Revendications

1. Copolymères organo-silicone hydrophiles pouvant être obtenus par polymérisation radicalaire en masse ou en solution d'un ou plusieurs macromères silicone comportant chacun au moins un groupe insaturé, et d'un ou plusieurs polyéthers comportant chacun au moins un groupe insaturé, ainsi qu'éventuellement d'un ou plusieurs monomères à insaturation éthylénique.

2. Copolymères organo-silicone hydrophiles selon la revendication 1, **caractérisés en ce qu'**on utilise en tant que macromères silicone des polysiloxanes linéaires, ramifiés, cycliques et à réticulation tridimensionnelle, comportant au moins 5 motifs répétitifs siloxane et comportant au moins un groupe fonctionnel polymérisable par voie radicalaire.

3. Copolymères organo-silicone hydrophiles selon la revendication 1, **caractérisés en ce qu'**on utilise en tant que macromères silicone des silicones de formule générale R¹ₐR₃₋ₐSiO(SiR₂O)ₙSiR₃₋ₐR¹ₐ, dans laquelle R est identique ou différent, et représente un radical alkyle ou alcoxy monovalent, éventuellement substitué, ayant chacun de 1 à 18 atomes de carbone, R¹ représente un groupe polymérisable, a est 0 ou 1, au moins un a étant égal à 1, et n va de 5 à 10 000.

4. Copolymères organo-silicone hydrophiles selon la revendication 1, **caractérisés en ce qu'**on utilise en tant que macromères silicone un ou plusieurs macromères choisis dans le groupe comprenant les α,ω-divinyl-polydiméthylsiloxanes, les α,ω-di-(3-acryloxypropyl)-polydiméthylsiloxanes, les α,ω-di-(3-méthacryloxypropyl)-polydiméthylsiloxanes, les α,ω-di-(acryloxyméthyl)-polydiméthylsiloxanes, les α,ω-di-(méthacryloxyméthyl)-polydiméthylsiloxanes, les α-monovinyl-polydiméthylsiloxanes, les α-mono-(3-acryloxypropyl)-polydiméthylsiloxanes, les α-mono-(acryloxyméthyl)-polydiméthylsiloxanes, les α-mono-(3-méthacryloxypropyl)-polydiméthylsiloxanes.

5. Copolymères organo-silicone hydrophiles selon l'une quelconque des revendications 1 à 4, **caractérisés en ce qu'**on utilise en tant que polyéther, comportant au moins un groupe insaturé, des polyoxyalkylènes comportant au moins 3 motifs répétitifs, qui comportent un ou plusieurs groupes alcényle appropriés à la polymérisation.

6. Copolymères organo-silicone hydrophiles selon la revendication 5, **caractérisés en ce qu'**on utilise en tant que polyéther comportant au moins un groupe insaturé un ou plusieurs polyéthers choisis dans le groupe comprenant l'éther divinylique de polyéthylèneglycol, l'éther diallylique de polyéthylèneglycol, l'éther divinylique de polypropylèneglycol, l'éther diallylique de polypropylèneglycol, le di(méth)acrylate de polyéthylèneglycol, le di(méth)acrylate de polypropylèneglycol, l'éther monovinylique de polyéthylèneglycol, l'éther monoallylique de polyéthylèneglycol, le mono-acrylate de polyéthylèneglycol, le mono-méthacrylate de polyéthylèneglycol, le mono-acrylate de polypropylèneglycol, le mono-méthacrylate de polypropylèneglycol, l'éther monovinylique de polyéthylèneglycol-polypropylèneglycol, l'éther mono-allylique de polyéthylèneglycol-polypropylèneglycol, le mono-acrylate de polyéthylèneglycol-polypropylèneglycol, le mono-méthacrylate de polyéthylèneglycol-polypropylèneglycol.

7. Copolymères organo-silicone hydrophiles selon l'une quelconque des revendications 1 à 6, **caractérisés en ce qu'**on utilise en tant que monomères à insaturation éthylénique un ou plusieurs monomères choisis dans le groupe comprenant des esters vinyliques d'acides alkylcarboxyliques ramifiés ou non ramifiés ayant de 1 à 15 atomes de carbone, des esters d'acide (méth)acrylique avec des alcools ayant de 1 à 15 atomes de carbone, des (méth)acrylamides, des composés vinylaromatiques, des oléfines, des diènes, des halogénures de vinyle, des vinylcétones, des éthers vinyliques, des silanes polymérisables, des acides mono- et dicarboxyliques insaturés ou leurs sels, des carboxamides et carbonitriles à insaturation éthylénique, des mono- et diesters de l'acide fumarique et de l'acide maléique, des acides sulfoniques à insaturation éthylénique et leurs sels, des monomères phosphorés à insaturation éthylénique et des monomères cationiques.

8. Copolymères organo-silicone hydrophiles selon la l'une quelconque des revendications 1 à 7, **caractérisés en ce que** 5 à 60 % en poids de macromère silicone, 30 à 90 % en poids de polyéther comportant au moins un groupe insaturé et éventuellement 5 à 50 % en poids de monomère à insaturation éthylénique sont copolymérisés, les données en % en poids se rapportant au poids total des monomères et leur somme réprésentant à chaque fois 100 % en poids.

9. Procédé pour la préparation de copolymères organo-silicone hydrophiles selon l'une quelconque des revendications 1 à 8, par polymérisation radicalaire en masse ou en solution d'un ou plusieurs macromères silicone comportant chacun au moins un groupe insaturé, et d'un ou plusieurs polyéthers comportant chacun au moins un groupe insaturé, ainsi qu'éventuellement d'un ou plusieurs monomères à insaturation éthylénique.

10. Utilisation des copolymères organo-silicone hydrophiles selon l'une quelconque des revendications 1 à 8, en tant que dispersants et émulsifiants.

11. Utilisation des copolymères organo-silicone hydrophiles selon l'une quelconque des revendications 1 à 8, en tant que composant ou additif pour cosmétiques.

12. Utilisation des copolymères organo-silicone hydrophiles selon l'une quelconque des revendications 1 à 8, en tant qu'agents de séparation et agents de revêtement.

13. Utilisation des copolymères organo-silicone hydrophiles selon l'une quelconque des revendications 1 à 8, en tant qu'additif dans des systèmes à base de ciment et des systèmes non à base de ciment et dans la protection de bâtiments.

14. Utilisation des copolymères organo-silicone hydrophiles selon l'une quelconque des revendications 1 à 8, dans le secteur du polissage et en tant qu'additif dans des compositions d'antimousses.

15. Utilisation des copolymères organo-silicone hydrophiles selon l'une quelconque des revendications 1 à 8, en tant qu'agents de modification, d'hydrophilie ou d'hydrophobie.

16. Utilisation des copolymères organo-silicone hydrophiles selon l'une quelconque des revendications 1 à 8, dans le domaine textile, en tant qu'assouplissant rendant hydrophile et comme agent anti-froissement.

17. Utilisation des copolymères organo-silicone hydrophiles selon l'une quelconque des revendications 1 à 8, pour le traitement du papier.
